(19) Europäisches Patentamt
European Patent Office
Office européen des brevets

(11) **EP 2 317 770 A1**

(12) **EUROPEAN PATENT APPLICATION**
published in accordance with Art. 153(4) EPC

(43) Date of publication:
**04.05.2011  Bulletin 2011/18**

(51) Int Cl.:
***H04N 7/32*** (2006.01)

(21) Application number: **09808044.3**

(22) Date of filing: **13.08.2009**

(86) International application number:
**PCT/JP2009/003886**

(87) International publication number:
**WO 2010/021108 (25.02.2010 Gazette 2010/08)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **18.08.2008  EP 08014651**

(71) Applicant: **Panasonic Corporation**
**Kadoma-shi**
**Osaka 571-8501 (JP)**

(72) Inventors:
 • **WITTMANN, Steffen**
   **63225 Langen (DE)**
 • **NARROSCHKE Matthias**
   **63225 Langen (DE)**

(74) Representative: **Grünecker, Kinkeldey,**
   **Stockmair & Schwanhäusser**
   **Anwaltssozietät**
   **Leopoldstrasse 4**
   **80802 München (DE)**

(54) **INTERPOLATION FILTERING METHOD, IMAGE ENCODING METHOD, IMAGE DECODING METHOD, INTERPOLATION FILTERING DEVICE, PROGRAM, AND INTEGRATED CIRCUIT**

(57) An interpolation filtering method includes selecting (S33), from an image, pixels to be used to interpolate a pixel to be interpolated; determining (S34) weight coefficients, each for a corresponding one of the pixels selected in the selecting of pixels; and calculating (S35) a pixel value of the pixel to be interpolated, by performing a weighted sum of pixel values of the pixels using the weight coefficients determined in the determining (S34) of weight coefficients. In the determining (S34) of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included and which is different from the neighboring block.

FIG. 3A

**Description**

[Technical Field]

The present invention relates to video coding and decoding, and in particular to a method for interpolating pixel values for a block-based video codec employing motion compensated prediction with fractional-pel resolution.

[Background Art]

For the compression of video data, a plurality of video coding standards has been developed. Such video standards are, for instance, ITU-T standards denoted with H.26x and ISO/IEC standards denoted with MPEG-x. The most up-to-data and advanced video coding standard is currently the standard denoted as H.264/MPEG-4AVC.

All of these standards are based on hybrid video coding, which consists of the following main stages:

(a) Dividing each individual video frame into two-dimensional blocks of pixels in order to subject each video frame to data compression at a block level.
(b) Decorrelating spatiotemporal video information by applying a spatio-temporal prediction scheme to each block and by transforming the prediction error from the spatial domain into the frequency domain so as to obtain coefficients.
(c) Reducing the overall amount of data by quantizing the resulting coefficients.
(d) Compressing the remaining data by coding the quantized coefficients and prediction parameters by means of an entropy coding algorithm.

Hence, state-of-the-art video standards employ a Differential Pulse Code Modulation (DPCM) approach which only transmits differences between blocks of an input video sequence and their predictions based on previously coded blocks.

One of the prediction schemes that may be employed by these video coding standards is motion compensated prediction. In this prediction scheme, at least one motion vector is determined for each block of video data in order to describe image displacements caused in object and/or camera movements. Based on the motion vectors determined, the image content of one block may be predicted at least to a certain extend from the image content of previously coded blocks. The difference between the predicted and the actual input image content is called the prediction error, which is then coded together with the motion vectors rather than the actual input image content. In this manner, a substantial reduction in the amount of information to be coded can be achieved for most "natural" video sequences.

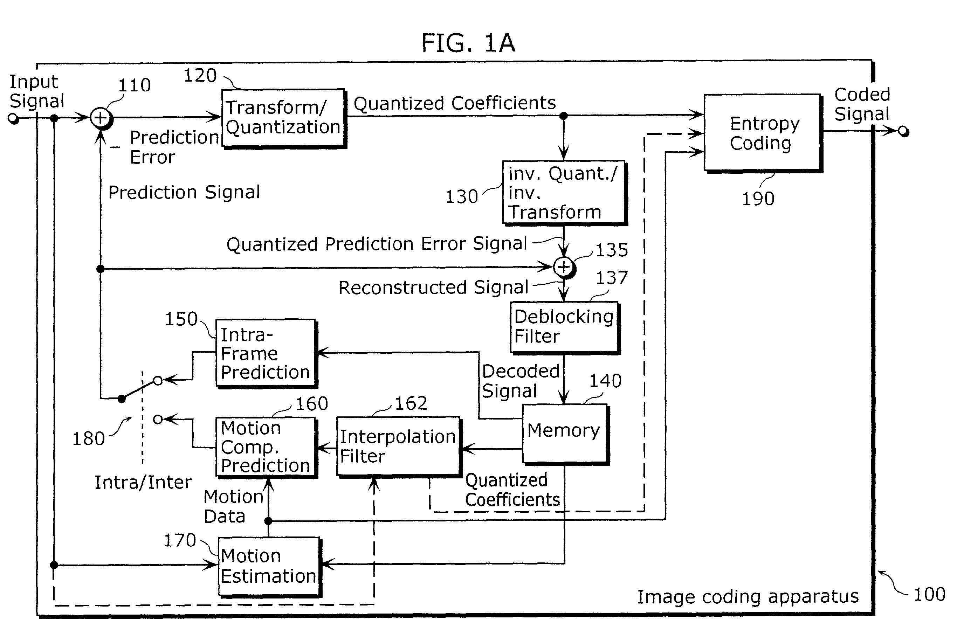

FIG. 1A is an exemplary block diagram of a conventional image coding apparatus 100, which is in accordance with the H.264/AVC standard. The image coding apparatus 100 includes a subtractor 110 for determining a prediction error signal which indicates differences between a current block of a video image (input signal) and a prediction signal of the current block which is based on previously coded blocks ("the locally decoded image") stored in memory 140. The memory unit 140 thus operates as a delay unit that allows a comparison between current signal values and a prediction signal generated from previous signal values. A transformation and quantization unit 120 transforms the resulting prediction error signal from the spatial domain to the frequency domain and quantizes the obtained quantized coefficients. An entropy coding unit 190 entropy codes the quantized coefficients.

The locally decoded image is provided by a decoding unit incorporated into the image coding apparatus 100. The decoding unit performs the coding steps in reverse manner. An inverse quantization and inverse transformation unit 130 dequantizes the quantized coefficients and applies an inverse transformation to the dequantized coefficients. In adder 135, the decoded quantized prediction error signal is added to the prediction signal to form the reconstructed signal.

Due to the quantization, quantization noise is superposed to the reconstructed video signal. Due to the blockwise coding, the superposed noise often has a blocking characteristic, which may be subjectively annoying. In order to reduce the blocking characteristic, a deblocking filter 137 may be applied to every reconstructed macroblock. The deblocking filter 137 is applied on the reconstructed signal, which is the sum of the prediction signal and the quantized prediction error signal. The deblocked signal is the decoded signal, which is generally displayed.

The deblocking filter 137 in H.264/AVC has the capability of local adaptation. In the case of a high degree of blocking noise, a strong low pass filter is applied whereas for a low degree of blocking noise, a weak low pass filter is applied. The strength of the deblocking filter 137 is determined based on the so-called boundary strength bS and on the gradient of pixel values across the boundary. The boundary strength bS is a parameter that is set in accordance with the manner in which the blocks p and q on both sides of the boundary are coded, as indicated by the following Table 1.

[Table 1]

| bS = 4 | p or q is intra coded and boundary is a macroblock boundary |
| --- | --- |
| bS = 3 | p or q is intra coded and boundary is not a macroblock boundary |
| bS = 2 | neither p or q is intra coded; p or q contain coded coefficients |
| bS = 1 | neither p or q is intra coded; neither p or q contain coded coefficients; p and q have different reference frames or a different number of reference frames or different motion vector values |
| bS = 0 | neither p or q is intra coded; neither p or q contain coded coefficients; p and q have same reference frame and identical motion vectors |

As an example for deblocking at a block boundary, a linear deblocking filter with four coefficients is provided. This filter is applied to six adjacent input samples $p_2$, $p_1$, $p_0$, $q_0$, $q_1$, and $q_2$, wherein the boundary is located between $p_0$ and $q_0$.

The filter output $p_0$, new and $q_0$,new is then defined as

$$p_{0,new} = (p_2 - (p_1 << 1) + (p_0 + q_0 + 1) >> 1) >> 1$$

and

$$q_{0,new} = (q_2 - (q_1 << 1) + (q_0 + p_0 + 1) >> 1) >> 1.$$

The type of prediction that is employed by the image coding apparatus 100 depends on whether the macro blocks are coded in "Intra" or "Inter" mode. In "Intra" mode the video coding standard H.264/AVC uses a prediction scheme based on already coded macro blocks of the same image in order to predict subsequent macro blocks. In "Inter" mode, motion compensated prediction between corresponding blocks of several consecutive frames is employed.

Only Intra-coded images (I-type images) can be decoded without reference to any previously decoded images. The I-type images provide error resilience for the coded video sequence. Further, entry points into bit streams of coded data are provided by the I-type images in order to enable a random access, i.e. to access I-type images within the sequence of coded video images. A switch between Intra-mode, i.e. a processing by Intra-frame prediction unit 150, and Inter-mode, i.e. a processing by motion compensated prediction unit 160, is controlled by switch 180 (Intra/Inter switch unit).

In "Inter" mode, a macro block is predicted from corresponding blocks of previous frames by employing motion compensated prediction. The estimation is accomplished by a motion estimator unit 170, receiving the current input signal and the locally decoded image. Motion estimation yields two-dimensional motion vectors, representing displacements between the current block and the corresponding block in already decoded frames. Based on the estimated motion, a motion compensated prediction unit 160 provides a prediction signal.

In order to optimize prediction accuracy, motion vectors may be determined at sub-pel resolution, e.g. half-pel or quarter-pel resolution. A motion vector with sub-pel resolution may point to a position within an already decoded frame where no pixel value is available, i.e. a sub-pel position. Hence, spatial interpolation of pixel values is needed in order to perform motion compensation. This is achieved by interpolation filter 162. According to the H.264/AVC standard, a 6-tap Wiener interpolation filter with fixed filter coefficients and a bilinear filter are applied in order to obtain pixel values for sub-pel positions.

Instead of the fixed interpolation filter of the H.264/AVC standard, adaptive interpolation filters may be employed in order to improve prediction accuracy. From Patent reference 1, for instance, a two-dimensional non-separable interpolation filter is known, which is independently calculated for each frame by minimizing the prediction error energy. For every fractional-pel position to be interpolated, an individual set of filter coefficients is determined on the encoder side and transmitted to the image decoding apparatus as side information; cf. the dashed lines in FIG. 1A.

For both the "Intra" and the "Inter" coding modes, the prediction error signal which indicates the differences between the current input signal and the prediction signal are transformed and quantized by a transformation/quantization unit 120 resulting in quantized coefficients. Generally, an orthogonal transformation such as a two-dimensional Discrete Cosine transformation (DCT) or an integer version thereof is employed.

The coefficients are quantized in order to reduce the amount of data that has to be coded. The step of quantization is controlled by quantization tables that specify the precision and therewith the number of bits that are used to code each frequency coefficient. Lower frequency components are usually more important for image quality than high frequency components so that more bits are spent for coding the low frequency components than for the higher ones.

After quantization, the two-dimensional array of quantized coefficients has to be converted into a one-dimensional string to pass it to the entropy coding unit 190. This conversion is done by scanning the array in a predetermined sequence. The thus obtained one-dimensional sequence of quantized coefficients is compressed and coded by the entropy coding unit 190 by means of a variable length code (VLC). The resulting bitstream is multiplexed with the motion information and stored on a recording medium or transmitted to the image decoding apparatus side.

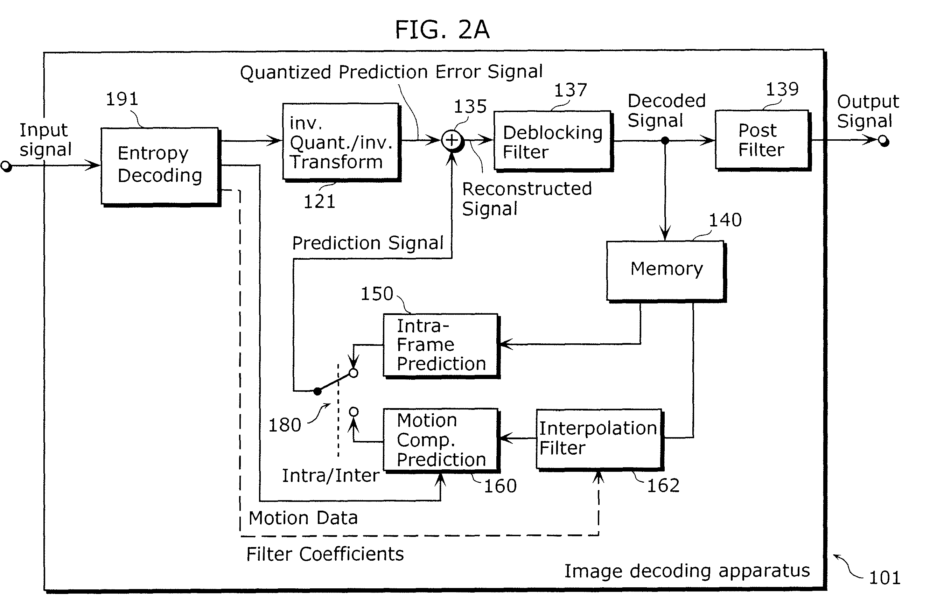

For reconstructing the coded images at the image decoding apparatus side, the coding process is applied in reverse manner. A schematic block diagram, illustrating the configuration of the corresponding image decoding apparatus, is shown in FIG. 2A.

In the image decoding apparatus 101 of FIG. 2A, first the entropy coding of coefficients and motion data is reversed in an entropy decoding unit 191. This step also involves an inverse scanning in order to convert the string of decoded coefficients into a two-dimensional array of data as it is required for the inverse transformation. The decoded block of quantized coefficients is then submitted to an inverse quantizer and inverse transformation unit 121 and the decoded motion data is sent to a motion compensated prediction unit 160.

Depending on the actual value of the motion vector, interpolation of pixel values may be needed in order to perform the motion compensated prediction. This interpolation is performed by interpolation filter 162. In case that adaptive interpolation filters are used, filter coefficients are also decoded by the entropy decoding unit 191 and fed into the interpolation filter 162; cf. the dashed line in FIG. 2A.

The result of the inverse transformation is the quantized prediction error signal in the spatial domain, which is added by adder 135 to the prediction signal stemming from the motion compensated prediction unit 160 in Inter-mode or stemming from an Intra-frame prediction unit 150 in Intra-mode. The reconstructed image may be passed through a deblocking filter 137 and the resulting decoded signal is stored in memory 140 to be applied to the Intra-frame prediction unit 150 or the motion compensated prediction unit 160.

[Citation List]

[Patent Literature]

[PTL1]
W02006/108654 A2 publication

[Summary of Invention]

[Technical Problem]

With or without the deblocking filter 137, block boundaries are prone to disturbing blocking artifacts. Even worse, motion compensated prediction tends to proliferate these artifacts by copying image areas in the vicinity of a block boundary within the reference frame into the center of a currently predicted block, depending on the value of the motion vector. This effect leads to a poor prediction accuracy and, hence, to a deterioration of coding efficiency.

It is thus an aim of the present invention to provide an improved method for video coding and decoding as well as a corresponding apparatus. It is a further aim of the present invention to provide an improved method for motion compensated prediction and an improved method for interpolating pixel values as it is required for motion compensated prediction at fractional-pel resolution.

[Solution to Problem]

According to an interpolation filter method according to an embodiment of the present invention, pixels of an image coded on a block-by-block basis are interpolated. To be specific, the interpolation filter method includes: selecting, from the image, pixels to be used for interpolating a pixel to be interpolated; determining weight coefficients, each for a corresponding one of the pixels selected in the selecting of pixels; and calculating a pixel value of the pixel to be interpolated, by performing a weighted sum of pixel values of the pixels using the weight coefficients determined in the determining of weight coefficients. In the determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

With the above configuration, pixels included in the block in which the pixel to be interpolated is included can be assigned with relatively larger weights while pixels included in a block which is different from the block in which the pixel to be interpolated is included can be assigned with relatively smaller weights. This makes it possible to minimize the blocky effects attributed to the coding on the block-by-block basis. Accordingly, a more accurately predicted block can be formed.

Furthermore, in the determining of weight coefficients, a distance is calculated between the pixel to be interpolated and a boundary of the current block. For each of the pixels, whether or not the pixel is included in the neighboring block may be determined by determining, using the calculated distance, whether or not the block boundary of the current block is present between the pixel to be interpolated and the pixel.

Furthermore, in the determining of weight coefficients, each of the weight coefficients may be determined such that a smaller weight coefficient is assigned to the pixel included in the neighboring block as a boundary strength of a block boundary between the current block and the neighboring block becomes higher. For example, in the case where the current block and the neighboring block are very blocky, pixels included in neighboring blocks are assigned with weight coefficients which have very small values. Such determining weight coefficients based on properties of a block boundary may lead to a further enhancement in prediction accuracy for a predicted block.

According to an embodiment of the present invention, in the determining of weight coefficients, each of the weight coefficients may be determined such that a smaller weight coefficient is assigned to the pixel included in the neighboring block when at least one of the current block and the neighboring block is inter coded than when both of the current block and the neighboring block are intra coded.

Furthermore, in the determining of weight coefficients, each of the weight coefficients may be determined such that a smaller weight coefficient is assigned to the pixel included in the neighboring block when the block boundary is a macroblock boundary than when the block boundary is not a macroblock boundary.

Furthermore, in the determining of weight coefficients, each of the weight coefficients may be determined such that a smaller weight coefficient is assigned to the pixel included in the neighboring block when at least one of the current block and the neighboring block contains a coded coefficient than when neither the current block or the neighboring block contains a coded coefficient.

Furthermore, in the determining of weight coefficients, the weight coefficients may be determined such that a weight coefficient smaller is assigned to the pixel included in the neighboring block when the current block and the neighboring block are different in at least one of a reference frame, the number of reference frames, and a motion vector value, than when the current block and the neighboring block are identical in all of a reference frame, the number of reference frames, and a motion vector value.

Furthermore, in the determining of weight coefficients, each of the weight coefficients may be determined such that a smaller weight coefficient is assigned to the pixel included in the neighboring block as a gradient of pixel values of two pixels across the block boundary between the current block and the neighboring block becomes steeper. This may also lead to a further enhancement in prediction accuracy for a predicted block.

In an image coding method according to an embodiment of the present invention, blocks to be coded are sequentially coded. To be specific, the image coding method includes: forming a predicted block for each of the blocks to be coded; and coding each of the blocks to be coded, using the predicted block. The forming of a predicted block includes: selecting, from an image, pixels to be used for interpolating a pixel to be interpolated; determining weight coefficients, each for a corresponding one of the pixels selected in the selecting of pixels; calculating a pixel value of the pixel to be interpolated, by performing a weighted sum of pixel values of the pixels using the weight coefficients determined in the determining of weight coefficients; and forming the predicted block based on the image in which pixels are interpolated. In the determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block. With the above configuration, it is possible to form a predicted block with high accuracy, allowing for an increase of coding efficiency for the block to be coded.

Furthermore, in the coding, the weight coefficients may be coded. This allows omission of a process of calculating the weight coefficients on the decoder side.

In an image decoding method according to an embodiment of the present invention, a coded signal is decoded to form a decoded block. To be specific, the image decoding method includes forming a predicted block for the decoded block; and decoding the coded signal, using the predicted block. The forming of a predicted block includes: selecting, from an image, pixels to be used for interpolating a pixel to be interpolated; determining weight coefficients, each for a corresponding one of the pixels selected in the selecting of pixels; calculating a pixel value of the pixel to be interpolated, by performing a weighted sum of pixel values of the pixels using the weight coefficients determined in the determining of weight coefficients; and forming the predicted block based on the image in which pixels are interpolated. In the determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

Such calculating weight coefficients on the decoder side according to the same rule as used on the encoder side will eliminate the need to code weight coefficients. This allows for a further increase of coding efficiency for the block to be coded.

An interpolation filtering apparatus according to an embodiment of the present invention interpolates pixels of an image coded on a block-by-block basis. To be specific, the interpolation filtering apparatus includes: a pixel selection unit configured to select, from the image, pixels to be used for interpolating a pixel to be interpolated; a weight coefficient determination unit configured to determine weight coefficients, each for a corresponding one of the pixels selected by the pixel selection unit; and an interpolation unit configured to calculate a pixel value of the pixel to be interpolated, by performing a weighted sum of pixel values of the pixels using the weight coefficients determined by the weight coefficient determination unit, The weight coefficient determination unit is configured to determine each of the weight coefficients for the corresponding one of the pixels such that a smaller weight coefficient is assigned to a pixel when the pixel is included in a neighboring block than when the pixel is included in a current block in which the pixel to be interpolated is included, the neighboring block being different from the current block.

A program according to an embodiment of the present invention causes a computer to interpolate pixels of an image coded on a block-by-block basis. To be specific, the program includes: selecting, from the image, pixels to be used for interpolating a pixel to be interpolated; determining weight coefficients, each for a corresponding one of the pixels selected in the selecting of pixels; and calculating a pixel value of the pixel to be interpolated, by performing a weighted sum of pixel values of the pixels using the weight coefficients determined in the determining of weight coefficients. In the determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

An integrated circuit according to an embodiment of the present invention interpolates pixels of an image coded on a block-by-block basis. To be specific, the integrated circuit includes: a pixel selection unit configured to select, from the image, pixels to be used for interpolating a pixel to be interpolated; a weight coefficient determination unit configured to determine weight coefficients, each for a corresponding one of the pixels selected by the pixel selection unit; and an interpolation unit configured to calculate a pixel value of the pixel to be interpolated, by performing a weighted sum of pixel values of the pixels using the weight coefficients determined by the weight coefficient determination unit. The weight coefficient determination unit is configured to determine each of the weight coefficients for the corresponding one of the pixels such that a smaller weight coefficient is assigned to a pixel when the pixel is included in a neighboring block than when the pixel is included in a current block in which the pixel to be interpolated is included, the neighboring block being different from the current block.

It is to be noted that the present invention may be implemented not only as an interpolation filtering method (apparatus) but also as an integrated circuit having these functions and a program causing a computer to execute such functions. In addition, it goes without saying that such a program may be distributed via a recording medium such as CD-ROM and a communication network such as the Internet.

This is achieved by the features as set forth in the independent claims.

Preferred embodiments are the subject matter of dependent claims.

It is the particular approach of the present invention to select the interpolation filter for interpolating pixel values at a certain position on the basis of the distance between this position and the next block boundary.

According to a first aspect of the present invention, a method for interpolating pixel values for a block-based video coder or decoder employing motion compensated prediction with fractional-pel resolution is provided. The method includes the step of applying a selected one of a plurality of interpolation filters to the pixel values that are to be interpolated and is characterized in that the interpolation filter is selected on the basis of a horizontal distance between an image position for which an interpolated value is sought and a nearest vertical block boundary and/or a vertical distance between an image position for which an interpolated value is sought and a nearest horizontal block boundary.

Preferably, the inventive method further includes the step of determining whether or not there is a block boundary within a predetermined horizontal distance and/or a predetermined vertical distance from an image position for which an interpolated value is sought, wherein the interpolation filter is selected on the basis of a result of the determining step. In this manner, the most appropriate interpolation filter may be selected depending on, for instance, whether there is a horizontal or vertical block boundary nearby or not.

Even more preferably, the predetermined horizontal distance and the predetermined vertical distance correspond to half the number of horizontal and vertical taps of the interpolation filters, respectively. The predetermined horizontal distance and the predetermined vertical distance may also be set to a value smaller than half the number of horizontal and vertical taps of the interpolation filters, respectively. In both cases, the interpolation filter may thus be selected on the basis of whether the filter support touches a block boundary or not, in other words, whether the filter taps are crossed by a block boundary or not.

Preferably, the inventive method further includes the steps of determining a first horizontal distance between an image position for which an interpolated value is sought and a next vertical block boundary to the right; determining a second horizontal distance between an image position for which an interpolated value is sought and a next vertical block boundary to the left; determining a first vertical distance between an image position for which an interpolated value is sought and a next horizontal block boundary above; and determining a second vertical distance between an image position for which an interpolated value is sought and a next horizontal block boundary below. Hence, the interpolation filter may preferably be selected on the basis of the first horizontal distance, the second horizontal distance, the first vertical distance, and the second vertical distance. In this case, the most appropriate interpolation filter may be selected in accordance with the distances to the surrounding block boundaries. Alternatively, the interpolation filter may also be selected on the basis of the minimum of the first horizontal distance and the second horizontal distance, and the minimum of the first vertical distance and the second vertical distance. This is particularly advantageous if the interpolation filters are symmetric, for instance, if filter taps to the left are weighted by the same coefficients as corresponding filter taps to the right.

Preferably, the interpolation filter is further selected on the basis of coding parameters indicating how the block to the left and the block to the right of the vertical block boundary are coded and/or coding parameters indicating how the block above and the block below the horizontal block boundary are coded. More preferably, the coding parameters indicate whether the blocks are intra- or inter-coded, and/or whether the blocks belong to different slices or not, and/or whether the blocks belong to different macroblocks or not, and/or whether the blocks contain coded coefficients or not, and/or whether the blocks have a common reference frame or not, whether the blocks have identical motion vectors or not. More preferably, the type of the interpolation filter may be determined according to the type and strength of the deblocking filter and/or loop filter applied to a particular boundary in a reference frame. An interpolation filter applied to the block boundary to which the strong deblocking filter and/or loop filter has been applied may be different from an interpolation filter applied to the block boundary to which filtering of a lower level than such filtering with the strong filter has been applied, or the block boundary to which no filtering has been applied. Hence, the most appropriate interpolation filter may also be selected in accordance with the type of a nearby block boundary. Different interpolation filters may for instance be applied depending on whether the block boundary is a macroblock boundary or a block boundary within a macroblock. The coding parameters may also provide an indication of the strength of the blocking artifacts that are to be expected at this particular boundary, such that the most appropriate interpolation filter may be selected accordingly. The coding parameters may further provide an indication of whether the block above (to the left) or the block below (to the right of) the boundary has been coded more faithfully such that interpolation may focus on pixel values on either side of the boundary in order to improve prediction accuracy.

Preferably, the interpolation filter is further selected on the basis of a gradient of pixel values across the vertical block boundary and/or a gradient of pixel values across the horizontal block boundary. The gradient may also provide some indication on the strength of blocking artifacts that occur at the block boundary such that the most appropriate interpolation filter may be selected. At a block boundary with pronounced blocking artifacts it may for instance be advantageous not to take any pixels from the other side of the boundary into account when computing the interpolated pixel, or to focus on pixels that are not directly adjacent to the boundary.

According to a further aspect of the present invention, a method for coding and/or decoding a sequence of moving images is provided. The method includes the steps of partitioning each image of the sequence of moving images into a plurality of blocks in order to code or decode the image on a block-by-block basis and applying motion compensated prediction in order to predict a block of the plurality of blocks from previously coded or decoded blocks, wherein pixel values of the predicted block are obtained by employing a method for interpolating pixel values according to the first aspect of the present invention.

Preferably, the coding method further includes the step of adapting the plurality of interpolation filters to the sequence of moving images by minimizing prediction error energy. Specifically, the prediction error energy may be obtained by computing a difference between a predicted block and a corresponding block of the sequence of moving images to be coded. In this manner, a set of optimum interpolation filters can be determined in accordance with the sequence of moving images to be coded. An improved prediction accuracy may be achieved by performing motion compensated prediction on the basis of the optimum interpolation filters, resulting in an increase of overall coding efficiency.

Preferably, the result of the adaptation is signaled to the decoder side by coding filter information indicating the adapted plurality of interpolation filters. The adapted interpolation filters may then be employed on the decoder side after decoding the filter information indicating the plurality of interpolation filters.

According to a further aspect of the present invention, a video encoder and a video decoder are provided that are adapted for coding or decoding a sequence of moving images in accordance with the second aspect of the present invention.

Finally, a computer program product is provided that includes a computer readable medium having computer readable program code embodied thereon, the program code being adapted for carrying out a method in accordance with the aspects of the present invention.

[Advantageous Effects of Invention]

According to the present invention, pixels included in the block in which the pixel to be interpolated is included can be assigned with relatively larger weights while pixels included in a block which is different from the block in which the pixel to be interpolated is included can be assigned with relatively smaller weights. This makes it possible to minimize the blocky effects attributed to the coding on the block-by-block basis. Accordingly, a more accurately predicted block can be formed.

[Brief Description of Drawings]

[Fig. 1A]
FIG. 1A is a block diagram of an image coding apparatus.
[Fig. 1B]

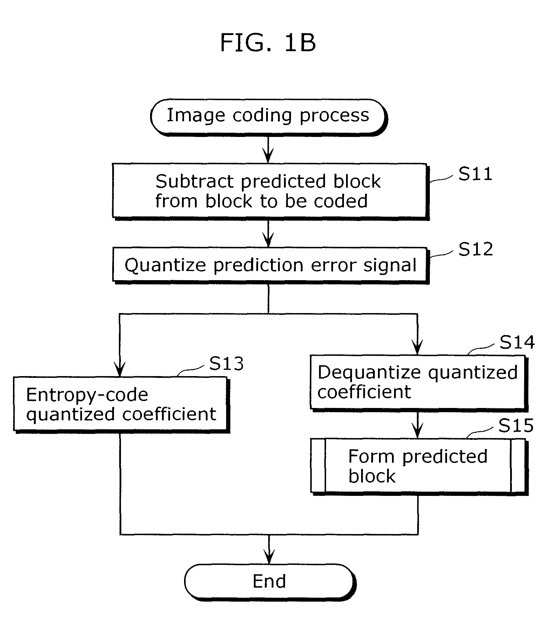

FIG. 1B is a flowchart of an operation of the image coding apparatus of FIG. 1A.
[Fig. 2A]
FIG. 2A is a block diagram of an image decoding apparatus.
[Fig. 2B]

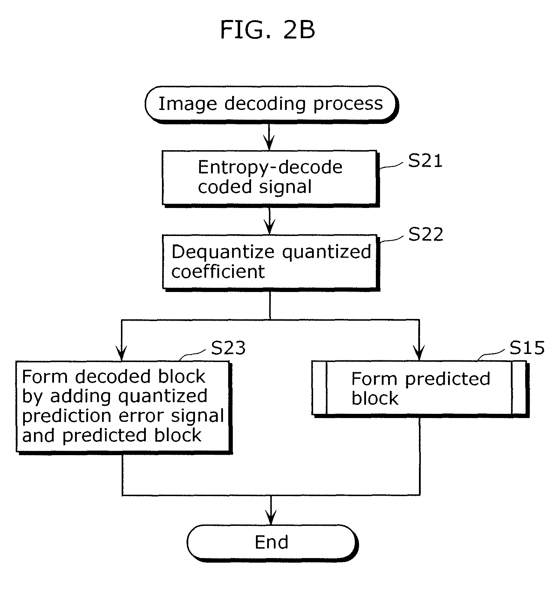

FIG. 2B is a flowchart of an operation of the image decoding apparatus of FIG. 2A.
[Fig. 3A]

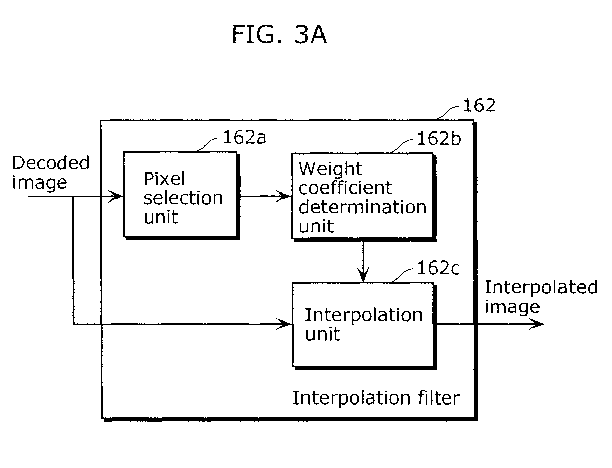

FIG. 3A is a block diagram of an interpolation filter.
[Fig. 3B]

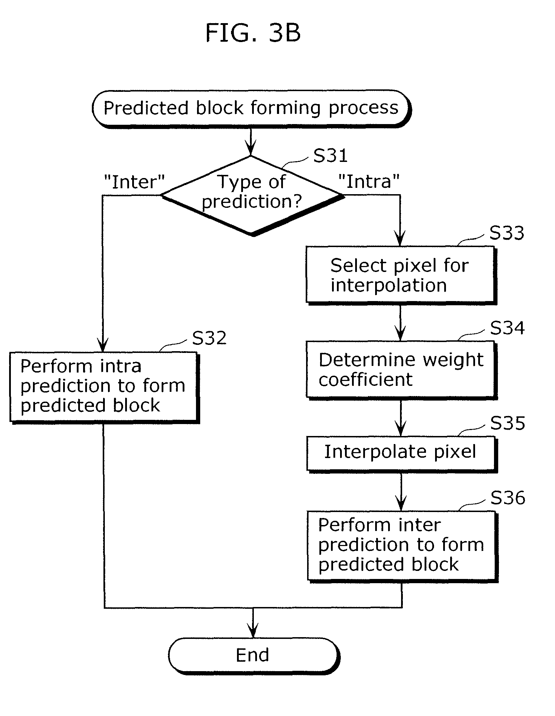

FIG. 3B is a flowchart of an operation of the interpolation filter of FIG. 3A.
[Fig. 4]

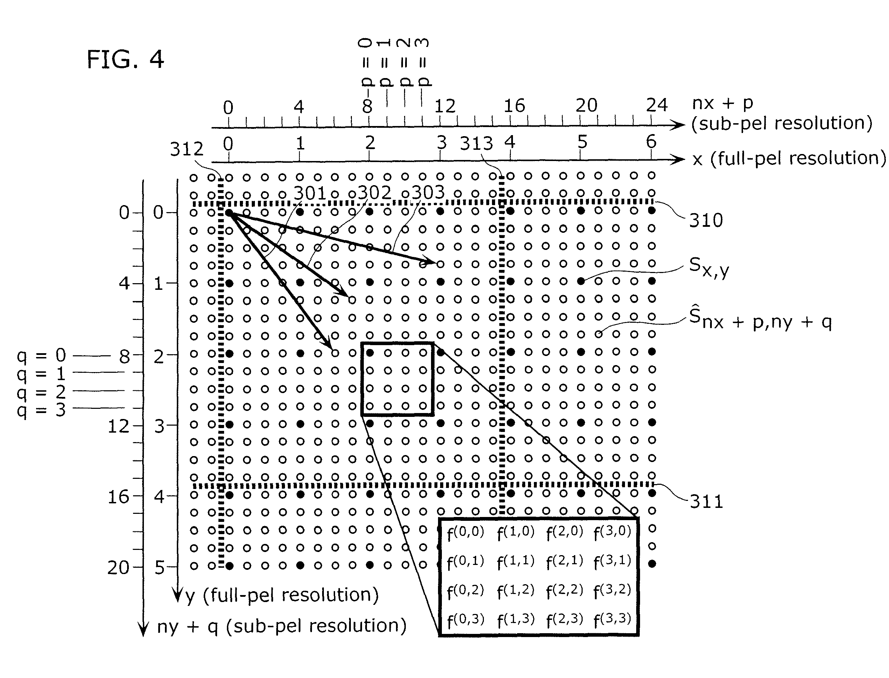

FIG. 4 is a schematic illustration of a block of video data and the interpolation filters employed for motion compensated prediction.
[Fig. 5]

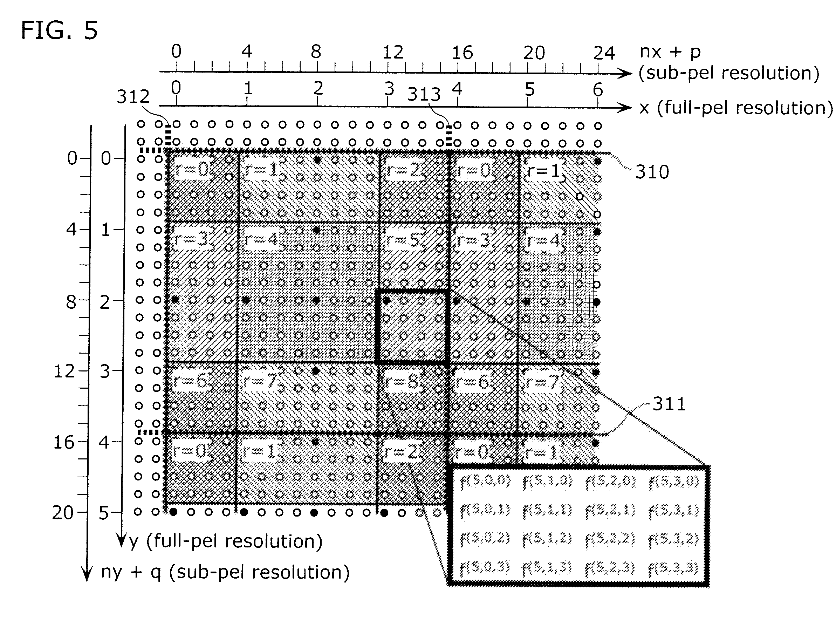

FIG. 5 is a schematic illustration of a scheme for selecting interpolation filters in accordance with an embodiment of the present invention.
[Fig. 6]

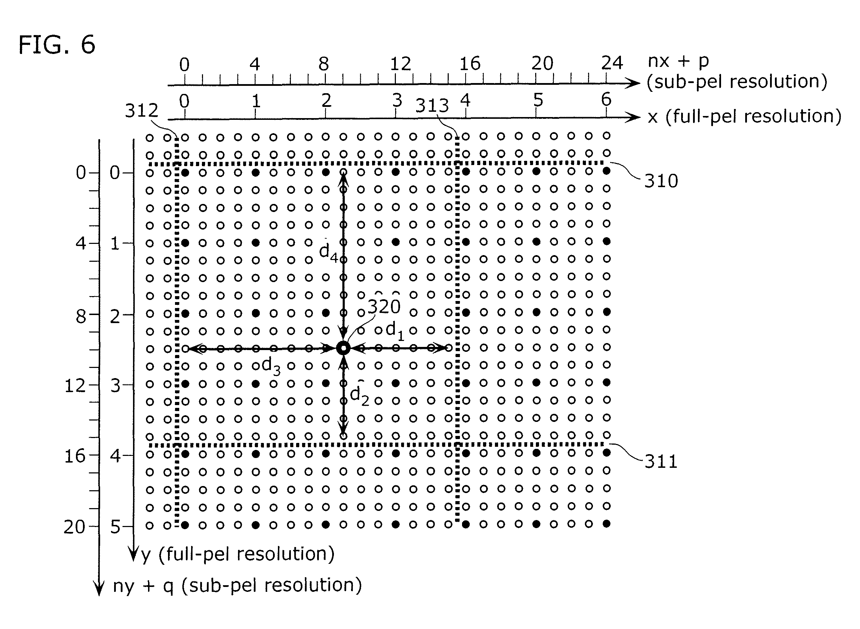

FIG. 6 is a schematic illustration of a scheme for selecting interpolation filters in accordance with a further embodiment of the present invention.
[Fig. 7A]

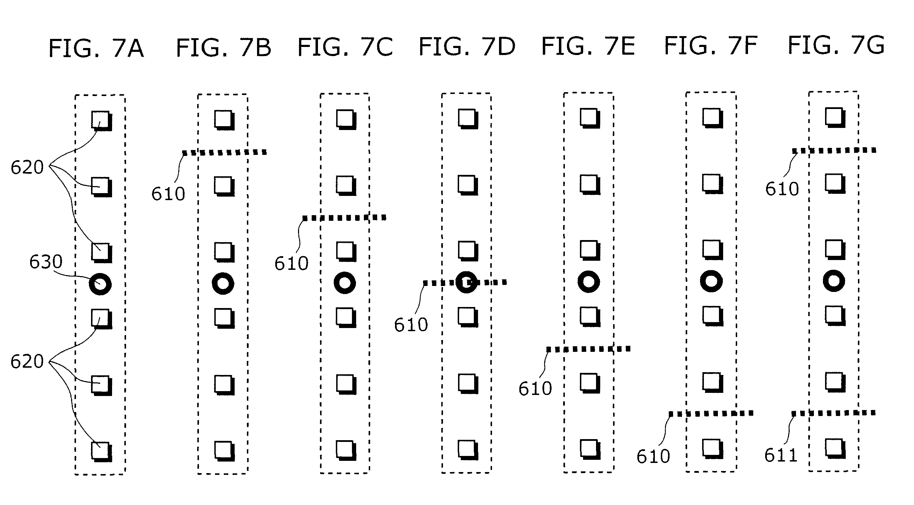

FIG. 7A is an illustration of the situation where filter taps do not cross a block boundary.
[Fig. 7B]
FIG. 7B is an illustration of the situation where a part of the filter taps (one pixel) crosses the block boundary.
[Fig. 7C]
FIG. 7C is an illustration of the situation where a part of the filter taps (two pixels) crosses the block boundary.
[Fig. 7D]
FIG. 7D is an illustration of the situation where a pixel to be interpolated is positioned on the block boundary.
[Fig. 7E]
FIG. 7E is a symmetrical view of FIG. 7C.
[Fig. 7F]
FIG. 7F is a symmetrical view of FIG. 7B.
[Fig. 7G]
FIG. 7G is an illustration of the situation where filter taps cross block boundaries at two positions.

[Description of Embodiments]

The above and other objects and features of the present invention will become more apparent from the following description and preferred embodiments given in conjunction with the accompanying drawings.
First of all, with reference to FIGS. 1A and 1B, the following shall describe the configuration and operation of the image coding apparatus 100 according to an embodiment of the present invention. FIG. 1A is a block diagram of the image coding apparatus 100. FIG. 1B is a flowchart of the operation of the image coding apparatus 100. The basic configuration of the image coding apparatus 100 is common between the conventional example and the present invention.

The image coding apparatus 100 includes, as shown in FIG. 1A, a subtractor 110, a transformation and quantization unit 120, an inverse quantization and inverse transformation unit 130, an adder 135, a deblocking filter 137, an entropy coding unit 190, and a predicted block forming unit (not shown). This image coding apparatus 100 sequentially codes blocks to be coded, which blocks constitute an image to be coded.

The subtractor 110 forms a prediction error signal by subtracting a predicted block (prediction signal) from the block to be coded (input signal). The transformation and quantization unit 120 applies the Discrete Cosine Transformation (DCT) to the prediction error signal and quantizes it to generate quantized coefficients. The entropy coding unit 190 entropy codes the quantized coefficients to form a coded signal. Together with the quantized coefficient, motion compensated data created by the motion estimator unit 170 and filter coefficients of the interpolation filter 162, etc. may be entropy coded.

The inverse quantization and inverse transformation unit 130 dequantizes the quantized coefficients and applies an inverse Discrete Cosine Transformation to the dequantized coefficients to form a quantized prediction error signal. The adder 135 adds up the quantized prediction error signal and the predicted block to form a reconstructed signal. The deblocking filter 137 removes blocky effects from the reconstructed signal to form a decoded signal.

The predicted block forming unit forms a predicted block for the block to be coded, on the basis of an image coded prior to the block to be coded (input signal). This predicted block forming unit includes a memory 140, an Intra-Frame prediction unit 150, a motion compensated prediction unit 160, an interpolation filter 162, a motion estimator unit 170, and a switch 180.

The memory 140 operates as a delay unit that temporarily stores the decoded signal. To be more specific, the memory 140 sequentially stores the blocks which have been quantized by the transformation and quantization unit 120 and dequantized by inverse quantization and inverse transformation unit, thus storing one image (picture). The Intra-frame prediction unit 150 forms a predicted signal from the decoded signal through the intra-prediction. The interpolation filter 162 spatially interpolates a pixel value of the decoded signal prior to the motion compensated prediction. The motion estimator unit 170 performs motion estimation on the basis of the decoded signal and the succeeding block to be coded, thereby creating motion data (motion vector). The motion compensated prediction unit 160 performs motion compensated prediction on the basis of the decoded signal and the motion data, thereby forming a predicted block. The switch 180 selects either "Intra" mode or "Inter" mode as a prediction mode. The predicted block outputted from the switch 180 then becomes a signal which predicts the succeeding block to be coded.

Next, the operation of the image coding apparatus 100 will be explained with reference to FIG. 1B.

First of all, the subtractor 110 subtracts a predicted block from a block to be coded, thereby forming a prediction error signal (S11). Next, the transformation and quantization unit 120 applies the DCT to the prediction error signal and quantizes it to generate quantized coefficients (S12). Subsequently, the entropy coding unit 190 entropy codes the quantized coefficients, motion data, and filter coefficients to form a coded signal (S13).

On the other hand, in parallel with the operation of the entropy coding unit 190, the inverse quantization and inverse transformation unit 130 dequantizes the quantized coefficients and applies an inverse DCT to the dequantized coefficients to form a quantized prediction error signal (S14). The adder 135 adds up the quantized prediction error signal and the predicted block to form a reconstructed signal. The deblocking filter 137 removes blocky effects from the reconstructed signal to form a decoded signal. The predicted block forming unit then forms a predicted block based on the decoded signal (S15). A predicted block forming process will be described later in detail.

Next, with reference to FIGS. 2A and 2B, the following shall describe the configuration and operation of the image decoding apparatus 101 according to an embodiment of the present invention. FIG. 2A is a block diagram of the image decoding apparatus 101. FIG. 2B is a flowchart of the operation of the image decoding apparatus 101. The basic configuration of the image decoding apparatus 101 is common between the conventional example and the present invention.

The image decoding apparatus 101 includes, as shown in FIG. 2A, an entropy decoding unit 191, an inverse quantization and inverse transformation unit 121, an adder 135, a deblocking filter 137, a post filter 139, and a predicted block forming unit (not shown). This image decoding apparatus 101 forms a decoded block (decoded signal) by decoding the coded signal coded by the image coding apparatus 100 shown in FIG. 1A. It is to be noted that the functional blocks in common with the image coding apparatus 100 shown in FIG. 1A will be denoted by the same reference numerals and descriptions thereof will be omitted.

The entropy decoding unit 191 entropy decodes the decoded signal (input signal) outputted from the image coding apparatus 100 to obtain quantized coefficients, motion data, and filter coefficients. The post filter 139 is, for example, a Wiener filter which is applied to a decoded signal, and improves subjective quality of images.

The predicted block forming unit includes a memory 140, an Intra-Frame prediction unit 150, a motion compensated prediction unit 160, an interpolation filter 162, and a switch 180. This predicted block forming unit has basically the same configuration and operation as that described above, except for the absence of the motion estimator unit 170, which results in differences that the motion data is obtained from the entropy decoding unit 191 and that the filter coefficients of the interpolation filter 162 are obtained from the entropy decoding unit 191.

Next, the operation of the image decoding apparatus 101 will be explained with reference to FIG. 2B.

First of all, the entropy decoding unit 191 entropy decodes the coded signal, thereby obtaining quantized coefficients, motion data, and filter coefficients (S21). Next, the inverse quantization and inverse transformation unit 121 dequantizes the quantized coefficients and applies the inverse DCT to the quantized coefficients to form a quantized prediction error signal (S22). The adder 135 adds up the quantized prediction error signal and the predicted block to form a reconstructed signal. In addition, the deblocking filter 137 removes blocky effects from the reconstructed signal to form a decoded block (S23). Furthermore, the image decoding apparatus 101 shown in FIG. 2A applies the post filter 139 to the decoded block to form an output signal.

On the other hand, in parallel with the filtering process using the post filter 139, the predicted block forming unit forms a predicted block (S15). A predicted block forming process will be described later in detail. Although the above example shows the interpolation filter 162 which operates with the filter coefficients obtained from the entropy decoding unit 191, the configuration is not limited thereto. To be specific, the interpolation filters 162 in the image coding apparatus 100 and in the image decoding apparatus 101 may determine the filter coefficients in the same manner. By so doing, the coded signal no longer needs to include the filter coefficients, resulting in an increase of coding efficiency.

Next, with reference to FIGS. 3A and 3B, the configuration of the interpolation filter 162 and the operation of the predicted block forming unit (predicted block forming process) will be explained. FIG. 3A is a block diagram of the interpolation filter 162. FIG. 3B is a flowchart of the predicted block forming process.

The interpolation filter 162 includes, as shown in FIG. 3A, a pixel selection unit 162a, a weight coefficient determination unit 162b, and an interpolation unit 162c. This interpolation filter 162 spatially interpolates pixels of the image stored in the memory 140.

The pixel selection unit 162a selects, from the image stored in the memory 140, pixels to be used for interpolating the pixel to be interpolated. The weight coefficient determination unit 162b determines a weight coefficient for each of the pixels selected by the pixel selection unit 162a. The interpolation unit 162c calculates a pixel value of the pixel to be interpolated, by performing a weighted sum of pixel values of the pixels using the weight coefficients determined in the weight coefficient determination unit 162b.

Next, the predicted block forming process will be explained with reference to FIG. 3B.

First of all, the predicted block forming unit determines which mode a predicted block for a succeeding block to be coded is to be predicted in; "Inter" mode or "Intra" mode, and accordingly switches the switch 180 (S31). In the case of the "Inter" mode ("Inter" in S31), the Intra-Frame prediction unit 150 forms a predicted block by using a decoded signal read out from the memory 140 (S32).

On the other hand, in the case of the "Intra" mode ("Intra" in S31), the interpolation filter 162 interpolates pixels of the image prior to the motion compensated prediction.

The pixel selection unit 162a first selects pixels to be used for interpolating the pixel to be interpolated (S33). For example, six pixels are selected in total; three pixels at full-pel positions to the right of the pixel to be interpolated and three pixels at full-pel positions to the left of the pixel to be interpolated.

Next, the weight coefficient determination unit 162b determines a weight coefficient for each of the pixels selected by the pixel selection unit 162a (S34). For example, weight coefficients for the six pixels in the above example will be (-2, -1, 0, 1, 2, 3).

It is to be noted that the weight coefficients will be different depending on whether the pixels selected by the pixel selection unit 162a are included in the current block, in which the pixel to be interpolated is included, or are included in the neighboring block, which is different from the current block. To be specific, a larger weight coefficient is assigned when the pixel is included in the current block than when the pixel is included in one of the neighboring blocks. For example, it is assumed that (-2, -1, 0, 1, 2, 3) in the above example are weight coefficients for the six pixels which are all included in the current block. In contrast, when only the pixel at the far right end is included in the neighboring block, weight coefficients (-2, -1, 0, 1, 2, 2) are assigned, for example.

It is to be noted that there is no particular limitation on a specific method in which the weight coefficient determination unit 162b determines whether or not each pixel is included in the current block. For example, first, a horizontal distance and/or a vertical distance from the pixel to be interpolated to a boundary of the current block is calculated. Subsequently, depending on whether or not the block boundary of the current block is present between the pixel to be interpolated and each pixel, it may be determined whether or not the pixel is included in the current block.

Next, the interpolation unit 162c performs a weighted sum of pixel values of the pixels selected by the pixel selection unit 162a, using the weight coefficients determined by the weight coefficient determination unit 162b (S35). The pixel value of the pixel to be interpolated is thus calculated. The processes from S33 to S35 are performed on all the pixels to be interpolated. Subsequently, the motion compensated prediction unit 160 forms a predicted block using the interpolated image and the motion data created by the motion estimator unit 170 (S36).

The above processes intend to assign relatively large weights to the pixels included in the block including the pixel to be interpolated while assigning relatively small weights to the pixels included in the blocks different from the block including the pixel to be interpolated. This makes it possible to minimize the blocky effects attributed to the coding on a block-by-block basis. Accordingly, a more accurately predicted block can be formed.

It is to be noted that in S34, the weight coefficients for the pixels included in the neighboring block may be changed according to the boundary strength bS of the block boundary between the current block and the neighboring block. To be specific, smaller weight coefficients may be given as the boundary strengths bS (i.e., with higher numerical values) in Table 1 becomes higher.

For example, smaller weight coefficients are assigned in the case where at least one of the current block and the neighboring block is inter coded (when bS=3, 4) than in the case where both of the current block and the neighboring block are intra coded (when bS=0, 1, 2).

Furthermore, in the case where at least one of the current block and the neighboring block is inter coded, smaller weight coefficients are assigned when the block boundary is a macroblock boundary (when bS=4) than when the block boundary is not a macroblock boundary (when bS=3).

Furthermore, in the case where both of the current block and the neighboring block are intra coded, smaller weight coefficients are used when at least one of the current block and the neighboring block contains a coded coefficient (when bS=2) than when neither the current block or the neighboring block contains a coded coefficient (when bS=1).

Furthermore, in the case where neither the current block or the neighboring block contains a coded coefficient, smaller weight coefficients are assigned when the current block and the neighboring block are different in at least one of the reference frames, the number of reference frames, and the motion vector values (when bS=1) than when the current block and the neighboring block are identical in all of the reference frames, the number of reference frames, and the motion vector values (when bS=0).

Moreover, in S34, values of the weight coefficients for the pixels included in the neighboring block may be changed according to a gradient of pixel values of two pixels across the block boundary between the current block and the neighboring block among the pixels selected by the pixel selection unit 162a. To be specific, as the gradient becomes steeper, smaller weight coefficients may be assigned.

Next, with reference to FIGS. 4 to 7G, a specific example of the process using the interpolation filter 162 (mainly a method in which the weight coefficient determination unit 162b determines the weight coefficients) will be explained.

FIG. 4 is a schematic drawing of a block of video data. Filled circles denote full-pel positions, i.e. sampling points of the original image, whereas open circles indicate sub-pel positions, at which pixel values have to be interpolated. Although the following figures illustrate quarter-pel resolution, the present invention may be applied to any particular fractional-pel resolution, including half-pel, quarter-pel, eighth-pel, etc., and even different sub-pel resolutions in vertical and horizontal direction.

Dashed lines 310-311 and 312-313 in FIG. 4 indicate horizontal and vertical block boundaries, respectively, namely boundaries of a 4-by-4 block. It is to be appreciated that the present invention can be applied to any block size, including 4-by-4, 8-by-4, 4-by-8, 8-by-2, 2-by-8, 8-by-8, 16-by-16, 32-by-16, 16-by-32, 32-by-32, 64-by-32, 32-by-64, 64-by-64 etc., as well as to combinations of different block sizes within one frame, as they may result from partitioning macroblocks independently of each other, in accordance with the H.264 standard.

In the following, n will denote sub-pel resolution, i.e., n=2 for half-pel and n=4 for quarter-pel resolution, etc. Moreover, the original image (or block of video data) will be denoted by $S_{x,y}$, which is the pixel value at full-pel position $(x, y)$. The corresponding horizontally and vertically interpolated image will be denoted by $\hat{S}_{nx+p,ny+q}$. Here, sub-pel position is denoted by p=0, ..., n-1 and q=0, ..., n-1; cf. FIG. 4. Hence, the pixel at full-pel position $(nx, ny)$ in the interpolated image corresponds to pixel $(x, y)$ in the original image. Herein, the sign "^ (hat)" indicates a sign applied to an adjacent character before the sign, and throughout the Description, the sign "^ (hat)" is used with the same meaning.

As explained above, conventional adaptive interpolation filters are defined individually for each sub-pel position $(p, q)$. Such a conventional adaptive interpolation filter may thus be defined as a linear operator $f^{(p, q)}$ mapping the original image to the corresponding horizontally and vertically interpolated image, viz. the following Eq. 1 is satisfied:.

[Math. 1]

$$\hat{S}_{nx+p,ny+q} = \sum_{i,j} f^{(p,q)}_{i,j} S_{x-i,\,y-j} \qquad \text{(Eq. 1)}$$

Here, $f^{(p,q)}_{i,j}$ are discrete filter coefficients (weight coefficients) for the interpolation filter with, for instance, i=-2, -1, 0, 1, 2, 3 and j=-2, -1, 0, 1, 2, 3 for a 6x6-tap filter. The set of points $(i, j)$ with non-zero filter coefficients $f^{(p,q)}_{i,j}$, e.g., the set of 6-by-6 pixels that affect the result of a 6x6-tap filter, is usually called filter support. Hence, the sum in Eq.

(1) and in the following Eq. 2 is supposed to run over the support of the filters involved.

Although conventional adaptive interpolation filters are defined individually for each sub-pel position, the very same interpolation filter is used to interpolate pixel values at a sub-pel position in the center of a block (which indicates a case where all the pixels to be used for interpolation are included in the current block; the same applies in the following) and at a corresponding sub-pel position close to a boundary of the block (which indicates a case where a part of the pixels to be used for interpolation is included in neighboring blocks; the same applies in the following). In a block-based video codec, however, this may be unfavourable, especially in the presence of marked blocking artifacts.

According to the present invention, this problem is resolved by taking the presence of block boundaries into account, for instance, by employing different interpolation filters for interpolating pixel values close to a block boundary and in a central portion of the block. The interpolation filter includes filters with different coefficients or filters with different filter lengths including an 8-tap filter, a 6-tap filter, a 4-tap filter, a 2-tap filter, and a 0-tap filter.

It is to be noted that the above explanation may be embodied not only in a case where physically multiple interpolation filters are provided but also in a case where an interpolation filter with its filter coefficient freely changeable is used. In addition, a filter length is substantially changeable by setting to zero the weight coefficients corresponding to the pixels included in the neighboring blocks.

The most general approach for achieving this distinction is to employ separate interpolation filters for *each* pixel (nx+p, ny-q) of the interpolated image. An interpolation filter according to the present invention may thus be defined as a linear operator $f^{(x, y, p, q)}$ mapping the original image to the corresponding horizontally and vertically interpolated image, viz. the following Eq. 2 is satisfied:

[Math. 2]

$$\hat{S}_{nx+p,\,ny+q} = \sum_{i,j} f_{i,j}^{(x,y,p,q)} S_{x-i,\,y-j} \qquad \text{(Eq. 2)}$$

wherein $f_{i,j}^{(x,y,p,q)}$ are discrete filter coefficients for the interpolation filter which do now depend on the current position (nx+p, ny-q) at sub-pel resolution in terms of *x, y, p,* and *q*.

Obviously, this approach will lead to an enormous number of filter coefficients that need to be transmitted to the decoder side. In order to reduce the signalling overhead to a reasonable amount, symmetries and invariances may be exploited. For instance, it is reasonable to assume that all interpolation filters (for a certain sub-pel position) within a central portion are identical, i.e., the following Eq. 3 is satisfied:

[Math. 3]

$$f_{i,j}^{(x,y,p,q)} = f_{i,j}^{(x',y',p,q)} \qquad \text{(Eq. 3)}$$

The central portion of the block may, for example, be defined such that the filter taps do not "touch" the block boundary. Further, interpolation filters for corresponding positions of different blocks should be identical, e.g., the following Eq. 4 is satisfied:

[Math. 4]

$$f_{i,j}^{(x,y,p,q)} = f_{i,j}^{(x \bmod N, y \bmod N, p, q)} \qquad \text{(Eq. 4)}$$

wherein a uniform partitioning of the image into blocks with size $N \times N$ is assumed.

Hence, the dependency of the interpolation filter on the full-pel position (x, y) should be alleviated by selecting for each full-pel position (x, y) an interpolation filter $f^{(r_i, p, q)}$ from a limited set of interpolation filters $\{f^{(0_i, p, q)},...,f^{(rmax_i, p, q)}\}$. The interpolation filters are thus indexed by an index r, which may be a function of *x* and *y*.

FIG. 5 shows an example for such an assignment of interpolation filters to different positions within a block. Here, a 4x4 block is partitioned into 9 domains *r*=0,...,8. Within each domain r the same interpolation filter $f^{(r_i, p, q)}$ is used for obtaining an interpolation at the same sub-pel positions (p, q). Obviously, the number and arrangement of the domains shown in FIG. 5 is by way of example only, so that more or fewer domains may be defined. It is also to be appreciated that even within one domain, in general, different filters are employed at different sub-pel positions.

The various domains shown in FIG. 5 are preferably defined in accordance with the size or support of the interpolation filter, i.e., the number of filter coefficients $f^{(r_i, p, q)}$ or taps used to define the interpolation filter. A 6x6-tap non-separable filter, for instance, is defined by 36 coefficients $f^{(r_i, p, q)}$ with i=-2, -1, 0, 1, 2, 3 and j=-2, -1, 0, 1, 2, 3. In this case, the interpolation value is determined from pixel values within a region of three pixels to the left, three pixels to the right, three pixels above, and three pixels below the current position.

The domains of FIG. 5 may, for instance, be defined such that an interpolation filter is selected on the basis of whether there is a block boundary within a certain distance of the interpolation position. This distance may preferably be set to half the number of horizontal or vertical filter taps. For a 6x6-tap filter, the distance may thus be set to 3. In this case, the interpolation filter is selected depending on whether the filter "touches" the block boundary or not. However, other distances may be used as well, especially distances smaller than half the number of horizontal or vertical filter taps. Pixel values at distances from the next block boundary greater than half the number of horizontal or vertical filter taps do no longer "feel" the block boundary and, hence, may be interpolated by a common interpolation filter, taking only the sub-pel positions p and q into account.

FIG. 6 shows another example for an assignment of interpolation filters to different positions within a block. According to this example, interpolation filters are selected on the basis of the distances $(d_1, d_2, d_3, d_4)$ of the position 320 to be interpolated and the four block boundaries. Hence, r is a multi-index $r=(d_1, d_2, d_3, d_4)$. It is to be appreciated that the very same interpolation filter may be selected for a plurality different positions within the block, for instance for all positions within the vertically and horizontally hatched region $(r=_4)$ in FIG. 5. This can be achieved by setting all distances larger than a certain maximum value $d_{max}$ to the maximum value, i.e., $r=(\min(d_1, d_{max}), ..., \min(d_4, d_{max}))$.

Moreover, the interpolation filter may also be selected on the basis of the horizontal and/or vertical distance to the closest block boundary only, i.e., $r=\min(d_1, d_2, d_3, d_4)$ or $r=(\min(d_1, d_3), \min(d_2, d_4))$. It is further to be appreciated that the distances $(d_1, d_2, d_3, d_4)$ only need to be determined at full-pel accuracy since the interpolation filters are generally dependent on the sub-pel position anyway.

In addition to the distance between the position to be interpolated and one or more block boundaries, properties of the boundary itself may be taken into account. According to a preferred embodiment of the present invention, the boundary strength bS (cf. Table 1 above) may also be employed for selecting the most appropriate interpolation filter. In this case, the index r also comprises an indication of the parameter bS, for instance by setting $r=(bS, d_1, d_2, d_3, d_4)$. In this manner, the interpolation filters may be set up such that certain pixels are neglected for obtaining the interpolated pixel if and only if they are separated by a "strong" boundary, for instance by a macroblock boundary or a slice boundary. Moreover, the influence of certain pixels on the result of the interpolation may be selectively emphasized, depending on whether they belong to the current block or the neighboring block and depending on which of these two blocks has been coded more faithfully.

In the following, a method for adapting the interpolation filters for optimum motion compensated prediction is briefly explained. First of all, it is requested that each interpolation filter should yield the original pixel values at full-pel positions. Hence, the following Eq. 5 is satisfied:

[Math. 5]

$$f_{i,j}^{(r,0,0)} = \delta_{i,0}\delta_{j,0} \qquad\qquad (Eq. 5)$$

wherein $\delta_{k,l}$ is the Kronecker-Delta, i.e. $\delta_{k,l}=1$ if k=l and $\delta_{k,l}=0$ if k ‡ l.

Referring again to FIG. 4, a displacement vector (301, 302, 303) will be denoted by $\vec{v}=(v_x, v_y)$. Herein, the sign "→ (vector)" indicates a sign applied to an adjacent character before the sign, and throughout the Description, the sign ""→ (vector)" is used with the same meaning. The components $v_x$ and $v_y$ refer to fractional-pel positions. A displacement vector with $V_x \bmod n=0$ is said to point to a full-pel position in x-direction (or to indicate a full-pel translation in x-direction).

A displacement vector with $V_x$modn=1, ..., (n-1) is said to point to a sub-pel position in x-direction (or to indicate a sub-pel translation in x-direction). A similar terminology will be used for the y-direction.

Referring now in particular to FIGS. 5 and 6, the filter coefficients $f^{(r, p, q)}_{i, j}$ of a certain filter class r for a given sub-pel position (p, q) are now determined as follows. Let $P_{x,y}$ denote the previously decoded reference image and $\vec{v}$= $(v_x, v_y)$ a displacement vector at sub-pel resolution that points to sub-pel position (p, q), i.e., a displacement vector with p= $V_x$modn and q= Vymodn. The energy of the prediction error for this displacement may thus be expressed as in the following Eq. 6:

[Math. 6]

$$\left(e_{p,q}\right)^2 = \sum_{x,y}\left(S_{x,y} - \sum_{i,j} f^{(r,p,q)}_{i,j} P_{\tilde{x}-i, \tilde{y}-j}\right)^2 \qquad (Eq.\ 6)$$

with $\tilde{x}$=x+[$v_x$/n] and $\tilde{y}$=y+[$v_y$/n], wherein [...] denotes the floor operator that yields the largest integer smaller than the operator's argument (round-down operator). Herein, the sign "~ (tilde)" indicates a sign applied to an adjacent character before the sign, and throughout the Description, the sign "~ (tilde)" is used with the same meaning. The sum over x and y is to be taken over that region of the original image for which the displacement vector is valid and to which an interpolation filter of class r is assigned. This region may correspond to a certain domain of the macro block, for which the displacement vector has been determined. The region may also consist of a (non-connected) union of some or all domains (of one or more video images) to which an interpolation filter of class r is assigned and which have displacement vectors that point to the same sub-pel position, i.e., displacement vectors with $v_x$modn=p and $v_y$modn=q.

The filter coefficients $f^{(r, p, q)}_{i, j}$ are now determined so as to minimize the prediction error energy of Eq. 6. The optimization may be performed by any numerical optimization algorithm known in the art, such as gradient descent, simulated annealing, etc. However, in the present case, the optimum filter coefficients may also be determined by solving a system of linear equations that results from computing the partial derivatives of Eq. 6 with respect to the filter coefficients $f^{(r, p, q)}_{i, j}$, viz. the following Eq. 7 is satisfied:

[Math. 7]

$$0 = \frac{\partial}{\partial f^{(r,p,q)}_{k,l}} \sum_{x,y}\left(S_{x,y} - \sum_{i,j} f^{(r,p,q)}_{i,j} P_{\tilde{x}-i, \tilde{y}-j}\right)^2 =$$

$$(Eq.\ 7)$$

$$= -2\sum_{x,y} P_{\tilde{x}-k, \tilde{y}-l}\left(S_{x,y} - \sum_{i,j} f^{(r,p,q)}_{i,j} P_{\tilde{x}-i, \tilde{y}-j}\right)$$

If the two-dimensional interpolation filter $f^{(r, p, q)}$ is separable, it may be rewritten as a composition of two separate one-dimensional filters $g^{(r, p, q)}$ and $h^{(r, p, q)}$, viz. the following Eq. 8 is satisfied:

[Math. 8]

$$\hat{S}_{nx+p,\,ny+q} = \sum_{j} h_j^{(r,\,p,\,q)} \sum_{i} g_i^{(r,\,p,\,q)} S_{x-i,\,y-j} \quad (\text{Eq. 8})$$

with $g_i^{(r,\,0,\,0)}=\delta_{i,0}$ and $h_j^{(r,\,0,\,0)}=\delta_{j,0}$.

It is generally assumed that the horizontal interpolation filter $g^{(r,\,p,\,q)}$ is independent of the vertical sub-pel position q, i.e., that $g^{(r,\,p,\,q)} = g^{(r,\,p)}$, and that the vertical interpolation filter does not affect the result of the interpolation on a full-pel row, i.e., that $h^{(r,\,p,\,0)} = \delta_{i,0}$. In this case, the two-dimensional interpolation can be considered as a two-step process: In a first step, horizontal interpolation is performed in order to determine pixel values at sub-pel positions on a "full-pel row". In a second step, pixel values on sub-pel rows are determined by applying vertical interpolation to pixel values determined in the first step. With these assumptions, filter coefficients for $g^{(r,\,p)}$ and $h^{(r,\,p,\,q)}$ can readily be determined from Eqs. (6) and/or (7). It may further be assumed that the vertical interpolation filter is independent of the horizontal sub-pel position p, i.e., that $h^{(r,\,p,\,q)} = h^{(r,\,q)}$. With this assumption, the total number of filter coefficients can be further reduced.

FIGS. 7A to 7G are each a schematic illustration of the selection of an interpolation filter on the basis of the location of a block boundary relative to the filter taps. The half-pel position to be interpolated is indicated by a circle 630, whereas full-pel positions on which the interpolation filter (here: 6-tap filter) operates are indicated by squares 620. FIG. 7A illustrates the situation in a central portion of a block, wherein filter taps do not cross a block boundary. FIGS. 7B to 7F each illustrate the five possible locations of the sub-pel position to be interpolated and the next block boundary 610. Finally, FIG. 7G illustrates the situation, wherein two block boundaries are present within the support of the interpolation filter. This situation may occur for small blocks, e.g., 4-by-4, and large filter support, that is, for "large" filters having a number of taps greater than the edge length of the block.

According to the present invention, a distinct interpolation filter is employed for each of the seven cases illustrated in FIGS. 7A to 7G. It is to be anticipated, however, that depending on the filter size, sub-pel resolution, and block size more or fewer distinct interpolation filters may be defined. Further, not necessarily all cases illustrated in FIGS. 7A to 7G need to be handled by distinct interpolation filters. If the filter is assumed to be symmetric, for instance, the filters employed in FIGS. 7B and 7C may be identical to those in FIGS. 7F and 7E, respectively. In addition, the filter in FIG. 7G may then be identical to the filters in FIG. 7B and FIG. 7F.

It is also to be appreciated that, for the sake of simplicity, only 1-dimensional examples are provided in FIGS 7A to 7G. Although these 1-dimensional examples may be directly applied to the two 1-dimensional interpolation filters $g^{(r,\,p)}$ and $h^{(r,\,p,\,q)}$ in case of a separable interpolation filter, similar distinctions may also be made for (non-separable) 2-dimensional interpolation filters on the basis of the location of horizontal and/or vertical block boundaries relative to the filter support.

It is also to be appreciated that other distinctions on the basis of block boundaries may be made in order to select the most appropriate interpolation filter. Such distinctions may include

· No edge / at least one edge
· No edge / one edge / two edges
· No edge / edge in the center / other edges
· No edge / edge in the center / one edge at different position / two edges
· No edge / edge in the center / edges to the right (one edge) / edges to the left (one edge) / two edges
· No edge / edge in the center /edges to the right with distance of two pixels to the center / edges to the right with distance of one pixel to the center / edges to the left with distance of one pixel to the center / edges to the left with distance of two pixels to the center / two edges
· In case of symmetric filters: no edge / edge in the center / edges with distance of two pixels to the center / edges with distance of one pixel to the center

Other options and combinations thereof, especially combinations with parameters classifying the block boundary, such as the boundary strength bS, are also feasible. In addition, since it is necessary to store, together with corresponding reference frames, the parameters which have been transmitted in a bit stream to decode a previous frame and which are used to select a filter, another memory may be added to store these coding parameters.

In order to select an interpolation filter, to be specific, a reference table is used in which an interpolation filter index k is specified by min(d1, d3) and min(d2, d4) where d1 to d4 represent distances from a sample to be interpolated to the closest block boundaries at full-pel accuracy (cf. FIG. 6). The block boundaries may be boundaries of blocks in any size including 4-by-4, 8-by-4, 4-by-8, 8-by-2, 2-by-8, 8-by-8, 16-by-16, 32-by-16, 16-by-32, 32-by-32, 64-by-32, 32-by-64, 64-by-64 etc., and may also be boundaries of combination of different sized blocks within one frame, as long as they are of blocks resulting from partitioning in accordance with a video coding method. The filter index k indicates an interpolation filter which is predicted on the encoder side and transmitted to the decoder. The interpolation filters may have different filter coefficients and may have different filter length including 8 taps, 6 taps, 4 taps, 2 taps, and 0 tap.

More preferably, in the case of a 6-tap interpolation filter, such a reference table is defined as follows.

[Table 2]

| $\min(d_1, d_3)$ at full-pel accuracy | $\min(d_2, d_4)$ at full-pel accuracy | filter index k |
|---|---|---|
| 0 | 0 | 0 |
| 0 | 1 or 2 | 1 |
| 0 | >2 | 2 |
| 1 or 2 | 0 | 3 |
| 1 or 2 | 1 or 2 | 4 |
| 1 or 2 | >2 | 5 |
| >2 | 0 | 6 |
| >2 | 1 or 2 | 7 |
| >2 | >2 | 8 |

Since transmitting the coefficients of adaptive filters may result in a high additional bit-rate, the overall coding gain can be reduced due to overhead information, especially for video sequences with small spatial resolution and in case of non-separable filters. In order to reduce the side information it may be assumed that statistical properties of an image are symmetric. Thus, the filter coefficients are taken to be equal in case the distance of the corresponding full-pel positions to the current sub-pel position are equal. However, due to artifacts in the signal like aliasing or due to displacement estimation errors, the symmetry assumption may not be valid for all sequences. Thus, this may lead to a loss of coding efficiency gains due to the limited adaptation of the filter to the signal statistics.

By applying symmetric and non-symmetric interpolation filters it is possible to control the amount of overhead information that is added to the bit-stream by transmitting filter coefficients. For instance for high resolution sequences it may be useful to transmit non-symmetric filters to achieve a optimal adaptation of the filter to the signal statistics, whereas for sequences with low resolution it may be necessary to apply symmetric filters in order to reduce the amount of overhead information. Each time symmetries are exploited, the corresponding filters at different sub-pel positions are jointly optimized. This may reduce the efficiency of the prediction in case of input signals containing aliasing or due to inaccurate motion estimation. It is to be noted that switching between symmetric and non-symmetric filters can be performed in a sub-pel position dependent manner in order to optimize accuracy of motion compensated prediction versus signalling overhead.

Summarizing, the present invention relates to video coding and decoding based on motion compensated prediction at fractional-pel resolution. According to this invention, interpolated pixel values at a certain sub-pel position are obtained by applying an interpolation filter that has been selected from a plurality of candidate filters on the basis of a distance between said sub-pel position and the next block boundary. In this manner, the plurality of candidate filters can be adapted for optimally interpolating pixels having a certain distance to the next block boundary. In addition, the type or strength of the boundary may be taken into account for selecting the most appropriate filter.

(Other variations)

Although the present invention has been explained in connection with the above embodiments, it is a matter of course that the present invention is not limited to the above embodiments. The following cases will also be included in the present invention.

The above devices are specifically computer systems each including a microprocessor, a ROM, a RAM, a hard disk unit, a display unit, a key board, a mouse, and so on. The RAM or hard disk unit stores a computer program. The microprocessor operates according to the computer program, thereby allowing each of the devices to accomplish its functions. The computer program herein is made of a combination of multiple command codes which indicate instructions to a computer in order to accomplish predetermined functions.

It may also be possible that part or all of the components included in each of the above devices are provided in one system LSI (large scale integration). The system LSI is a super multifunctional LSI manufactured by integrating multiple component units into one chip and is specifically a computer system which includes a microprocessor, a ROM, a RAM and so on. The RAM stores a computer program. The microprocessor operates according to the computer program, thereby allowing the system LSI to accomplish its functions.

Part or all of the components included in each of the above devices may be in form of an IC card detachable from each of the devices or in form of a single module. The IC card or module is a computer system including a microprocessor, a ROM, a RAM, and so on. The IC card or module may include the above super multifunctional LSI. The microprocessor operates according to the computer program, thereby allowing the IC card or module to accomplish its functions. This IC card or module may have tamper resistance.

The present invention may be a method described above. Furthermore, the present invention may be a computer program which causes a computer to execute the method or may be a digital signal of the computer program.

Furthermore, the present invention may be a computer-readable recording medium including, for example, a flexible disk, a hard disk, a CD-ROM, an MO, a DVD, a DVD-ROM, a DVD-RAM, a BD (Blu-ray Disc), and a semiconductor memory, on which the computer program or the digital signal are recorded. The present invention may also be a digital signal recorded on the recording medium.

Furthermore, the present invention may be transmission of the computer program or the digital signal via a network represented by a telecommunication line, a wired or wireless communication line, and the Internet, or data broadcasting, etc.

Furthermore, the present invention may be a computer system including a memory which stores the above computer program and a microprocessor which operates according to the computer program.

Furthermore, the program or digital signal recorded on the recording medium may be transmitted or the program or the digital signal may be transmitted via the network or the like so that the present invention can be implemented by another independent computer system.

It is to be noted that although the image coding apparatus 100 and the image decoding apparatus 100 explained in the above embodiments include the interpolation filter 162 shown in FIG. 3A, the present invention is not limited to the embodiments and may be the interpolation filter 162 itself. This means that the interpolation filter 162 provided in the image coding apparatus 100 and the image decoding apparatus 101 may be formed into a module which can be provided as an interpolation filter device, an interpolation filtering method, an interpolation filtering program, an interpolation filter integrated circuit, or the like.

The above embodiments and the above variation may be combined.

While the embodiments of the present invention are explained herein with reference to the drawings, the present invention is not limited to those of the embodiments shown. To the embodiments shown, various modifications and variations may be added within the literal or equivalent scope of the claims of the present invention.

[Industrial Applicability]

The present invention is advantageous, particularly when used in an image coding method and an image decoding method which use motion compensated prediction.

[Reference Signs List]

| | |
|---|---|
| 100 | Image coding apparatus |
| 101 | Image decoding apparatus |
| 110 | Subtractor |
| 120 | Transformation and quantization unit |
| 121, 130 | Inverse quantization and inverse transformation unit |
| 135 | Adder |
| 137 | Deblocking filter |
| 139 | Post filter |
| 140 | Memory |
| 150 | Intra-Frame prediction unit |
| 160 | Motion compensated prediction unit |
| 162 | Interpolation filter |
| 162a | Pixel selection unit |

| 162b | Weight coefficient determination unit |
| 162c | Interpolation unit |
| 170 | Motion estimator unit |
| 180 | Switch |
| 190 | Entropy coding unit |
| 191 | Entropy decoding unit |
| 301, 302, 303 | Displacement vector |
| 310, 311, 312, 313 | Dashed line |
| 320 | Position to be interpolated |
| 610 | Block boundary |
| 620 | Square |
| 630 | Circle |

**Claims**

1. An interpolation filtering method of interpolating pixels of an image coded on a block-by-block basis, said interpolation filtering method comprising:

   selecting, from the image, pixels to be used for interpolating a pixel to be interpolated;
   determining weight coefficients, each for a corresponding one of the pixels selected in said selecting of pixels; and
   calculating a pixel value of the pixel to be interpolated, by performing a weighted sum of pixel values of the pixels using the weight coefficients determined in said determining of weight coefficients,
   wherein, in said determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

2. The interpolation filtering method according to Claim 1,
   wherein, in said determining of weight coefficients,
   a distance is calculated between the pixel to be interpolated and a boundary of the current block, and
   for each of the pixels, whether or not the pixel is included in the neighboring block is determined by determining, using the calculated distance, whether or not the block boundary of the current block is present between the pixel to be interpolated and the pixel.

3. The interpolation filtering method according to Claim 1,
   wherein, in said determining of weight coefficients, each of the weight coefficients is determined further such that a smaller weight coefficient is assigned to the pixel included in the neighboring block as a boundary strength of a block boundary between the current block and the neighboring block becomes higher.

4. The interpolation filtering method according to Claim 3,
   wherein, in said determining of weight coefficients, each of the weight coefficients is determined such that a smaller weight coefficient is assigned to the pixel included in the neighboring block when at least one of the current block and the neighboring block is inter coded than when both of the current block and the neighboring block are intra coded.

5. The interpolation filtering method according to Claim 4,
   wherein, in said determining of weight coefficients, each of the weight coefficients is determined further such that a smaller weight coefficient is assigned to the pixel included in the neighboring block when the block boundary is a macroblock boundary than when the block boundary is not a macroblock boundary.

6. The interpolation filtering method according to Claim 4,
   wherein, in said determining of weight coefficients, each of the weight coefficients is determined further such that a smaller weight coefficient is assigned to the pixel included in the neighboring block when at least one of the current block and the neighboring block contains a coded coefficient than when neither the current block or the neighboring block contains a coded coefficient.

7. The interpolation filtering method according to Claim 6,
   wherein, in said determining of weight coefficients, the weight coefficients are determined further such that a weight coefficient smaller is assigned to the pixel included in the neighboring block when the current block and the neighboring block are different in at least one of a reference frame, the number of reference frames, and a motion vector value, than when the current block and the neighboring block are identical in all of a reference frame, the number of reference frames, and a motion vector value.

**8.** The interpolation filtering method according to Claim 3,
wherein, in said determining of weight coefficients, each of the weight coefficients is determined further such that a smaller weight coefficient is assigned to the pixel included in the neighboring block as a gradient of pixel values of two pixels across the block boundary between the current block and the neighboring block becomes steeper.

**9.** An image coding method of sequentially coding blocks to be coded,

said image coding method comprising:

forming a predicted block for each of the blocks to be coded; and
coding each of the blocks to be coded, using the predicted block,
wherein said forming of a predicted block includes:

selecting, from an image, pixels to be used for interpolating a pixel to be interpolated;
determining weight coefficients, each for a corresponding one of the pixels selected in said selecting of pixels;
calculating a pixel value of the pixel to be interpolated, by performing a weighted sum of pixel values of the pixels using the weight coefficients determined in said determining of weight coefficients; and
forming the predicted block based on the image in which pixels are interpolated, and
in said determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

**10.** The image coding method according to Claim 9,
wherein, in said coding of each of the blocks to be coded, further the weight coefficients are coded.

**11.** An image decoding method of decoding a coded signal to form a decoded block, said image decoding method comprising:

forming a predicted block for the decoded block; and
decoding the coded signal, using the predicted block,
wherein said forming of a predicted block includes:

selecting, from an image, pixels to be used for interpolating a pixel to be interpolated;
determining weight coefficients, each for a corresponding one of the pixels selected in said selecting of pixels;
calculating a pixel value of the pixel to be interpolated, by performing a weighted sum of pixel values of the pixels using the weight coefficients determined in said determining of weight coefficients; and
forming the predicted block based on the image in which pixels are interpolated, and
in said determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

**12.** An interpolation filtering apparatus which interpolates pixels of an image coded on a block-by-block basis, said interpolation filtering apparatus comprising:

a pixel selection unit configured to select, from the image, pixels to be used for interpolating a pixel to be interpolated;
a weight coefficient determination unit configured to determine weight coefficients, each for a corresponding one of the pixels selected by said pixel selection unit; and
an interpolation unit configured to calculate a pixel value of the pixel to be interpolated, by performing a weighted sum of pixel values of the pixels using the weight coefficients determined by said weight coefficient determination unit,

wherein said weight coefficient determination unit is configured to determine each of the weight coefficients for the corresponding one of the pixels such that a smaller weight coefficient is assigned to a pixel when the pixel is included in a neighboring block than when the pixel is included in a current block in which the pixel to be interpolated is included, the neighboring block being different from the current block.

13. A program which causes a computer to interpolate a pixel of an image coded on a block-by-block basis, said program comprising:

   selecting, from the image, pixels to be used for interpolating a pixel to be interpolated;
   determining weight coefficients, each for a corresponding one of the pixels selected in said selecting of pixels; and
   calculating a pixel value of the pixel to be interpolated, by performing a weighted sum of pixel values of the pixels using the weight coefficients determined in said determining of weight coefficients, and
   wherein, in said determining of weight coefficients, each of the weight coefficients is determined for the corresponding one of the pixels such that a smaller weight coefficient is assigned to a pixel when the pixel is included in a neighboring block than when the pixel is included in a current block in which the pixel to be interpolated is included, the neighboring block being different from the current block.

14. An integrated circuit which interpolates a pixel of an image coded on a block-by-block basis, said integrated circuit comprising:

   a pixel selection unit configured to select, from the image, pixels to be used for interpolating a pixel to be interpolated;
   a weight coefficient determination unit configured to determine weight coefficients, each for a corresponding one of the pixels selected by said pixel selection unit; and
   an interpolation unit configured to calculate a pixel value of the pixel to be interpolated, by performing a weighted sum of pixel values of the pixels using the weight coefficients determined by said weight coefficient determination unit,
   wherein said weight coefficient determination unit is configured to determine each of the weight coefficients for the corresponding one of the pixels such that a smaller weight coefficient is assigned to a pixel when the pixel is included in a neighboring block than when the pixel is included in a current block in which the pixel to be interpolated is included, the neighboring block being different from the current block.

## FIG. 1A

Image coding apparatus 100

# FIG. 1B

```
        ( Image coding process )
                   |
                   v
    +---------------------------+
    |   Subtract predicted block |  — S11
    |   from block to be coded   |
    +---------------------------+
                   |
                   v
    +---------------------------+
    | Quantize prediction error signal |  — S12
    +---------------------------+
                   |
        +----------+-----------------+
        |                            |
        v                            v
                               +---------------------------+  — S14
   — S13                       | Dequantize quantized      |
  +----------------------+     | coefficient               |
  | Entropy-code         |     +---------------------------+
  | quantized coefficient|                |
  +----------------------+                v
        |                           +---------------------------+  — S15
        |                           | Form predicted            |
        |                           | block                     |
        |                           +---------------------------+
        |                            |
        +----------+-----------------+
                   |
                   v
              (    End    )
```

## FIG. 2A

EP 2 317 770 A1

## FIG. 2B

```
   ( Image decoding process )
              |
              v
   +------------------------+   S21
   | Entropy-decode         |
   | coded signal           |
   +------------------------+
              |
              v
   +------------------------+   S22
   | Dequantize quantized   |
   | coefficient            |
   +------------------------+
              |
      +-------+-------+
      |               |
      v   S23         v   S15
+-----------------+  +------------------+
| Form decoded    |  | Form predicted   |
| block           |  | block            |
| by adding       |  +------------------+
| quantized       |
| prediction      |
| error signal    |
| and predicted   |
| block           |
+-----------------+
      |               |
      +-------+-------+
              |
              v
          ( End )
```

# FIG. 3A

# FIG. 3B

```
          ┌─────────────────────────────────┐
          │ Predicted block forming process │
          └─────────────────────────────────┘
                          │
                          ▼            S31
          "Inter"  ◇ Type of ◇  "Intra"
          ┌──────── prediction? ────────┐
          │                             │
          │                             ▼           S33
          │                   ┌──────────────────┐
          │                   │ Select pixel for │
          │                   │ interpolation    │
          │                   └──────────────────┘
          │                             │
          ▼           S32               ▼           S34
┌──────────────────┐        ┌──────────────────┐
│ Perform intra    │        │ Determine weight │
│ prediction to form│        │ coefficient      │
│ predicted block  │        └──────────────────┘
└──────────────────┘                  │
          │                             ▼           S35
          │                   ┌──────────────────┐
          │                   │ Interpolate pixel│
          │                   └──────────────────┘
          │                             │
          │                             ▼           S36
          │                   ┌──────────────────┐
          │                   │ Perform inter    │
          │                   │ prediction to form│
          │                   │ predicted block  │
          │                   └──────────────────┘
          │                             │
          └──────────────┬──────────────┘
                         ▼
                    ┌─────────┐
                    │   End   │
                    └─────────┘
```

FIG. 4

EP 2 317 770 A1

# FIG. 5

FIG. 6

EP 2 317 770 A1

FIG. 7A   FIG. 7B   FIG. 7C   FIG. 7D   FIG. 7E   FIG. 7F   FIG. 7G

## INTERNATIONAL SEARCH REPORT

| | International application No. |
|---|---|
| | PCT/JP2009/003886 |

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2007/011189 A1 (LG ELECTRONICS INC.), 25 January 2007 (25.01.2007), entire text; all drawings & JP 2009-502089 A & US 2008/0291997 A1 & KR 10-2007-0012201 A | 1-14 |
| A | JP 2004-7337 A (Sony Corp.), 08 January 2004 (08.01.2004), entire text; all drawings & US 2004/0213470 A1 | 1-14 |
| A | JP 2005-72824 A (Victor Company Of Japan, Ltd.), 17 March 2005 (17.03.2005), entire text; all drawings (Family: none) | 1-14 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 November, 2009 (13.11.09) | 24 November, 2009 (24.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/003886 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | Thomas Wedi, "Adaptive interpolation filter for motion compensated prediction", Proceedings of 2002 International Conference on Image Processing. 2002., 2002-12-10, vol. 2, p. II-509 - II-512 | 1-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006108654 A2